# EUROPEAN PATENT APPLICATION

(11) **EP 4 697 256 A1**
(43) Date of publication of application: **18.02.2026**
(21) Application number: 24925143.0
(22) Date of filing: 26.06.2024
(51) Int. Cl.: G06T 1/20

(54) **GRAPHICS RENDERING RESOURCE MANAGEMENT METHOD AND APPARATUS, RELATED DEVICE, AND RENDERING METHOD**

(71) Applicant: VeriSilicon Microelectronics (Shanghai) Co., Ltd., Shanghai 201203 (CN); VeriSilicon Microelectronics (Chengdu) Co., Ltd., Chengdu, Sichuan 610041 (CN)
(72) Inventor: HUANG, Ying, Shanghai 201203 (CN); ZHANG, Huiming, Shanghai 201203 (CN); YANG, Xin, Shanghai 201203 (CN); HOU, Lei, Shanghai 201203 (CN); LI, Junjie, Shanghai 201203 (CN); LIU, Jia, Shanghai 201203 (CN); XU, Nuo, Shanghai 201203 (CN)
(74) Representative: Bryn Aarflot AS
(86) International application number: PCT/CN2024/101596
(87) International publication number: WO 2026/000237

(57) **Abstract**

The present disclosure provides a management method and an apparatus for graphics rendering resources, a related device and a rendering method. The management method for graphics rendering resources includes: determining, in response to a received management instruction generated in a running process of at least one rendering program, a hardware resource object for calling graphic rendering, based on the management instruction and an interface function conversion relationship and a driving conversion relationship in a rendering resource object of a rendering program corresponding to the management instruction; and managing, according to the determined hardware resource object and the management instruction, a hardware resource of the graphic rendering required by the management instruction, wherein the interface function conversion relationship includes a conversion relationship between a pre-set hardware resource interface function and a target interface function of a hardware resource required for calling graphic rendering; and the driving conversion relationship includes a conversion relationship between the pre-set hardware resource interface function and the hardware resource object. The above method can reduce difficulty and cost of graphics rendering hardware resource management in scenarios with a plurality of rendering programs.

## Description

### TECHNICAL FIELD

The present invention relates to the field of chip design, and specifically to a management method and an apparatus for graphics rendering resources, a related device and a rendering method.

### BACKGROUND ART

Currently, some electronic devices need to support different rendering programs, for example, devices loaded with Windows (a computer operating system) system need to support D3D (Direct 3D, three-dimensional drawing programming interface), Vulkan (a drawing application program interface), OpenGL (Open Graphics Library) and like rendering programs.

Regarding different rendering programs, each rendering program converts its call function into a respective API (Application Programming Interface), and then calls a GPU (Graphics Processing Unit) through the API to execute rendering. Currently, each rendering program is designed with a set of API interface codes to manage hardware resources of the GPU, while different rendering programs require the same GPU, merely different in name and definition of API; therefore, API interfaces need to be converted for different rendering programs, so that various rendering programs can call and manage the same GPU, for example, APIs of D3D and other rendering programs currently are usually converted into API of Vulkan.

The above manner is complicated when performing maintenance, test, repair and other management operations on the hardware resources of the GPU, for example, when an interface of the GPU needs to be modified, codes of an associated Vulkan API and an associated D3D API need to be simultaneously modified, and a conversion relationship between these APIs also needs to be modified. A process of calling and converting the API interface is particularly complicated; for example, an API interface that needs to be driven by each D3D needs to be implemented by one or several APIs driven by Vulkan, during which input parameters of the D3D API also need to be converted into input parameters of Vulkan. Meanwhile, an output result of the Vulkan API is converted into an output result required by D3D. Even in some extreme situations, some API interface functions of D3D cannot directly call Vulkan, but need to perform some delayed call processing.

The above manner makes management of the hardware resources of the graphics processing unit GPU complicated, in which case more development resources and conversion overheads are consumed, and difficulty in maintenance and test is high. In addition, as the above conversion process is executed by a CPU (Central Processing Unit), the complicated conversion operation may affect CPU overhead and overall performance of a device.

### SUMMARY

In view of this, the present invention aims at providing a management method and an apparatus for graphics rendering resources, a related device and a rendering method, so as to reduce difficulty and cost of hardware resource management in scenarios with a plurality of rendering programs.

In the first aspect, embodiments of the present invention provide a management method for graphics rendering resources, applied to a central processing unit, wherein the central processing unit is connected to a graphics processing unit, the central processing unit is configured with at least two different rendering programs, and the graphics processing unit is configured to provide hardware resources of graphics rendering for the rendering programs, wherein the management method for graphics rendering resources includes steps of: determining, in response to a received management instruction generated in a running process of at least one rendering program, a hardware resource object for calling graphic rendering, based on the management instruction and an interface function conversion relationship and a driving conversion relationship in a rendering resource object of a rendering program corresponding to the management instruction; and managing, according to the determined hardware resource object and the management instruction, a hardware resource of the graphic rendering required by the management instruction, wherein each of the rendering programs is separately configured with a corresponding rendering resource object, and each of the rendering resource objects includes the interface function conversion relationship and the driving conversion relationship; the interface function conversion relationship includes a conversion relationship between a pre-set hardware resource interface function and a target interface function of a hardware resource required for calling the graphic rendering; the pre-set hardware resource interface functions in rendering resource objects corresponding to different rendering programs are the same; the target interface functions in the rendering resource objects corresponding to different rendering programs are different, and the target interface function in each of the rendering resource objects is a call interface function of the rendering program corresponding to the rendering resource object to the graphic rendering resource; and the driving conversion relationship includes a conversion relationship between the pre-set hardware resource interface function and the hardware resource object, and the hardware resource object is configured to call the hardware resource of the graphics rendering.

In the embodiments of the present invention, for different rendering programs, respective call interface functions are all converted into the unified pre-set hardware resource interface function, thus, each rendering program does not need to convert the call interface function into respective corresponding API, and further does not need to perform mutual conversion in an API level, so that neither code conversion logics between call interface functions corresponding to various rendering programs and APIs nor conversion logics of APIs between different rendering programs need to be designed. Compared with the conversion between APIs corresponding to different rendering programs, the conversion of the call interface functions has lower complexity, and can effectively reduce complexity and difficulty in designing. In addition, when codes need to be maintained and tested, maintenance and testing do not need to be performed on the conversion in the API level, thus reducing management difficulty. As the convention of the call interface functions is simpler, a load of the central processing unit can also be reduced, and performances of the central processing unit during operation can be improved.

In an embodiment, the pre-set hardware resource interface function is different from the target interface functions of all the rendering programs configured in the central processing unit.

In the embodiments of the present invention, the pre-set hardware resource interface function is different from the target interface functions of all rendering programs in the central processing unit, that is, the pre-set hardware resource interface function may be a set of interface functions separately written or target interface functions of rendering programs not configured in the central processing unit, thus, by converting the target interface functions of all rendering programs in the central processing unit into the pre-set interface function, the management of the graphics rendering resources can be carried out, without the need of performing the conversion between call interfaces of the rendering programs already configured, so that the management method for graphics rendering resources can be suitable for more scenarios and is improved in universality.

In an embodiment, the central processing unit further includes a driving layer and driving units respectively corresponding to the different rendering programs; the pre-set hardware resource interface function is the same as a target interface function of a pre-set rendering program; the pre-set rendering program is any rendering program in the central processing unit; and the pre-set rendering program is corresponding to a pre-set driving unit; prior to determining a hardware resource object for calling graphic rendering, based on the management instruction and an interface function conversion relationship and a driving conversion relationship in a rendering resource object of a rendering program corresponding to the management instruction, the method further includes steps of: calling, in response to running of another rendering program other than the pre-set rendering program, the pre-set driving unit to create an initial rendering resource object of the rendering program, based on a driving unit of the rendering program, wherein the initial rendering resource object includes the pre-set hardware resource interface function; and controlling, based on the driving unit of the rendering program, the pre-set driving unit to create an interface function conversion relationship between the pre-set hardware resource interface function and a target interface function of the rendering program in the initial rendering resource object, to obtain the rendering resource object corresponding to the rendering program.

In the embodiments of the present invention, the pre-set hardware resource interface function is a call interface function of any rendering program (i.e., the pre-set rendering program) to the central processing unit, that is, the call interface function of the another rendering programs to the graphics processing unit is converted into the call interface function of the pre-set rendering program to the graphics processing unit, and the two use one set of rendering resource management codes in common, without the need of additionally providing a third set of codes of the pre-set hardware resource interface function, which can further reduce the complexity; moreover, when receiving the management instruction of the pre-set rendering program, there is no need to convert the API of the pre-set rendering program, thus reducing the workload of the central processing unit. At the same time, compared with conversion of API, different rendering programs have similar functions, their rendering resource management codes are generally similar, and conversion therebetween is easier to realize, thus effectively reducing the complexity of conversion, thereby reducing difficulty and cost of the rendering resource management, and reducing difficulty and costs of development, testing, maintenance and so on. In this condition, when creating the rendering resource objects corresponding to other rendering programs, the pre-set driving unit of this pre-set rendering program can be multiplexed to create initial rendering resource objects corresponding to the other rendering programs, thus simplifying the design complexity, reducing code overhead, and reducing management difficulty.

In an embodiment, the rendering resource object further includes call information on the hardware resource for the rendering program corresponding to the rendering resource object to perform the graphics rendering, wherein the call information includes at least one of identification information on the hardware resource object and an access address of a hardware resource corresponding to the hardware resource object in the graphics processing unit.

Determining the required hardware resource using the identification information or the access information in the graphics processing unit has high accuracy. In the embodiments of the present invention, configuring in the call information the identification information on the hardware resource or the access address of the hardware resource in the graphics processing unit can effectively improve accuracy of managing the hardware resource of the graphics processing unit by a management apparatus for graphics rendering resources.

In an embodiment, the step of determining a hardware resource object for calling graphic rendering, based on the management instruction and an interface function conversion relationship and a driving conversion relationship in a rendering resource object of a rendering program corresponding to the management instruction, includes: acquiring, in response to the received management instruction, at least one of the access address of and the identification information on the hardware resource required by the rendering program, from the rendering resource object corresponding to the rendering program; and determining the hardware resource object based on at least one of the access address of and the identification information on the hardware resource.

In the embodiments of the present invention, when performing the rendering, the access address of or identification information on the hardware resource of the graphics processing unit required can be quickly acquired through the rendering resource object, without the need of acquiring the access address or the identification information after determining the hardware resource object, which can effectively improve rendering efficiency.

In an embodiment, hardware resources of graphics rendering required by each rendering program are diverse; and the pre-set hardware resource interface function includes pre-set hardware resource interface sub-functions corresponding to various kinds of hardware resources respectively; the step of calling the pre-set driving unit to create an initial rendering resource object of the rendering program, based on a driving unit of the rendering program, includes: acquiring, in response to running of another rendering program other than the pre-set rendering program, various kinds of hardware resources required by the rendering program; and calling the pre-set driving unit based on a driving unit of the rendering program, so as to make the pre-set driving unit create initial rendering resource objects corresponding to various kinds of hardware resources required by the rendering program, respectively, wherein the initial rendering resource objects corresponding to various kinds of hardware resources include pre-set hardware resource interface sub-functions corresponding to various kinds of hardware resources; the step of controlling, based on the driving unit of the rendering program, the pre-set driving unit to create an interface function conversion relationship between the pre-set hardware resource interface function and a target interface function of the rendering program in the initial rendering resource object, to obtain the rendering resource object corresponding to the rendering program, includes: controlling, for each of the initial rendering resource objects, based on the driving unit of the rendering program, the pre-set driving unit to create an interface function conversion relationship between the pre-set hardware resource interface sub-function and the target interface function of the rendering program, in the initial rendering resource object, to obtain the rendering resource object corresponding to the rendering program.

In the embodiments of the present invention, respective corresponding rendering resource objects are allocated for different types of hardware resources of the graphics processing unit required by the rendering programs, thus, different rendering resource objects may be used to manage different hardware resources required, and in subsequent testing and maintenance, different rendering resource objects may be used to manage different hardware sources, respectively, thus improving effectiveness and accuracy of managing hardware resources required by image rendering.

In an embodiment, after obtaining the rendering resource object corresponding to the rendering program, the method further includes a step of: destroying, in response to stop of running of any other rendering program other than the pre-set rendering program, the rendering resource object corresponding to the rendering program.

In an embodiment, after the step of determining a hardware resource object for calling graphic rendering, based on the management instruction and an interface function conversion relationship and a driving conversion relationship in a rendering resource object of a rendering program corresponding to the management instruction, the method further includes a step of: synchronizing, in response to call of any rendering program to the hardware resource of the graphics rendering, data reading and writing in the central processing unit and the graphics processing unit based on a resource synchronization unit of the pre-set rendering program.

In embodiments of the present invention, different rendering programs can call the resource synchronization unit to synchronize data reading and writing between the central processing unit and the graphics processing unit, thus improving the accuracy of the hardware resource management in scenarios with a plurality of rendering programs. Meanwhile, any rendering program can call the resource synchronization unit of the pre-set rendering program, thus, there is no need to separately provide a resource synchronization unit in other rendering program modules, the code overhead and design difficulty are reduced, and the difficulty and costs of testing, maintenance and other management operations are reduced.

In the second aspect, embodiments of the present invention provide a management apparatus for graphics rendering resources, applied to a central processing unit, wherein the central processing unit is connected to a graphics processing unit, the central processing unit is configured with at least two different rendering programs, and the graphics processing unit is configured to provide hardware resources of graphics rendering for the rendering programs, wherein the management apparatus for graphics rendering resources includes: at least two rendering program modules, wherein the rendering program modules which are different run different rendering programs respectively; and a driving layer, configured to determine, in response to a received management instruction generated in a running process of at least one rendering program, a hardware resource object for calling graphic rendering, based on the management instruction and an interface function conversion relationship and a driving conversion relationship in a rendering resource object of a rendering program corresponding to the management instruction, wherein the driving layer is further configured to manage, according to the determined hardware resource object and the management instruction, a hardware resource of graphic rendering required by the management instruction, wherein the driving layer is separately configured, each of the rendering programs is separately configured with a corresponding rendering resource object, and each of the rendering resource objects includes the interface function conversion relationship and the driving conversion relationship; the interface function conversion relationship includes a conversion relationship between a pre-set hardware resource interface function and a target interface function of a hardware resource required for calling the graphic rendering; the pre-set hardware resource interface functions in rendering resource objects corresponding to different rendering programs are the same; the target interface functions in the rendering resource objects corresponding to different rendering programs are different, and the target interface function in each of the rendering resource objects is a call interface function of the rendering program corresponding to the rendering resource object to the graphic rendering resource; and the driving conversion relationship includes a conversion relationship between the pre-set hardware resource interface function and the hardware resource object, and the hardware resource object is configured to call the hardware resource of the graphics rendering.

In an embodiment, the pre-set hardware resource interface functions in the rendering resource objects are different from call interface functions used by the rendering programs corresponding to the rendering program modules.

In an embodiment, the different rendering program modules each include a driving unit corresponding to respective rendering program; the pre-set hardware resource interface functions in the rendering resource objects are the same as the target interface function of the pre-set rendering program; the pre-set rendering program is a rendering program corresponding to any one of the rendering program modules; and the pre-set rendering program module of the pre-set rendering program includes a pre-set driving unit; another rendering program module other than the pre-set rendering program module is configured to: call, in response to running of the rendering program, the pre-set driving unit to create an initial rendering resource object of the rendering program, based on a driving unit of the rendering program, wherein the initial rendering resource object includes the pre-set hardware resource interface function; and the driving unit corresponding to the rendering program is further configured to control the pre-set driving unit to create an interface function conversion relationship between the pre-set hardware resource interface function and a target interface function of the rendering program in the initial rendering resource object, to obtain the rendering resource object corresponding to the rendering program.

In an embodiment, the rendering resource object further includes call information on a hardware resource for the rendering program corresponding to the rendering resource object to perform the graphics rendering, wherein the call information includes at least one of identification information on the hardware resource and an access address of the hardware resource in the graphics processing unit.

In an embodiment, each of the rendering program modules is configured to: acquire, in response to the management instruction of the rendering program running in the rendering program module, at least one of an access address of and identification information on the hardware resource required by the rendering program from the rendering resource object corresponding to the rendering program running in the rendering program module, and determine the hardware resource object based on at least one of the access address of and the identification information on the hardware resource.

In an embodiment, the hardware resources of the graphics processing unit GPU required by each rendering program are diverse; and the pre-set hardware resource interface function includes pre-set hardware resource interface sub-functions corresponding to various kinds of hardware resources respectively; the driving layer is further configured to: acquire, in response to running of the rendering program in any of the rendering program modules, various kinds of hardware resources required by the rendering program of the rendering program module; call the pre-set driving unit based on the driving unit corresponding to the rendering program module, so as to make the pre-set rendering program drive the pre-set driving layer to create initial rendering resource objects corresponding to various kinds of hardware resources required by the rendering program, respectively, wherein the initial rendering resource objects corresponding to various kinds of hardware resources include pre-set hardware resource interface sub-functions corresponding to various kinds of hardware resources; and the driving layer is further configured to: control, for the initial rendering resource object corresponding to each of the rendering programs, based on the driving unit corresponding to the rendering program, the pre-set driving unit to create an interface function conversion relationship between the pre-set hardware resource interface sub-function and the target interface function of the rendering program corresponding to the rendering program module in the initial rendering resource object, to obtain the rendering resource object corresponding to the rendering program.

In an embodiment, another rendering program module other than the pre-set rendering program module further includes a destruction unit; and the another rendering program module is further configured to drive, in response to stop of running of the rendering program of the rendering program module, the destruction unit to destroy the rendering resource object corresponding to the rendering program in the driving layer.

In an embodiment, the pre-set rendering program module further includes a resource synchronization unit, wherein the resource synchronization unit is configured to synchronize, in a situation that the rendering program in any of the rendering program modules calls the hardware resource of the graphics processing unit, data reading and writing in the central processing unit and the graphics processing unit.

In the third aspect, the present invention provides an electronic device, including: a central processing unit; a memory, wherein the memory stores a program; the processing unit is configured to run the program to implement the management method for graphics rendering resources according to any in the first aspect; and a graphics processing unit, connected to the central processor unit, and configured to provide the hardware resources of the graphics rendering for execution of the rendering program in the central processing unit.

In the fourth aspect, embodiments of the present invention provide a computer-readable storage medium, wherein the readable storage medium stores a computer program, and when the computer program runs on a computer, the computer is made to implement the management method for graphics rendering resources according to any in the first aspect.

In the fifth aspect, embodiments of the present invention provide a rendering method, including: determining, in a situation that a rendering instruction of any rendering program is received, according to an interface function conversion relationship in a rendering resource object corresponding to the rendering program, an intermediate interface function corresponding to a target interface function in the rendering instruction under a pre-set hardware resource interface function type, wherein the rendering resource object includes the interface function conversion relationship and a driving conversion relationship; and the interface function conversion relationship includes a conversion relationship between a pre-set hardware resource interface function and a target interface function of a hardware resource for calling graphic rendering; the pre-set hardware resource interface functions in rendering resource objects corresponding to different rendering programs are the same; target interface functions in the rendering resource objects corresponding to different rendering programs are different, and the target interface function in each of the rendering resource objects is a call interface function of the rendering program corresponding to the rendering resource object to the graphic rendering resource; converting the intermediate interface function into a hardware resource object corresponding to the rendering instruction by using the driving conversion relationship, wherein the driving conversion relationship includes a conversion relationship between the pre-set hardware resource interface function and the hardware resource object, and the hardware resource object is configured to call the hardware resource of the graphics rendering; and sending the rendering instruction to the graphics processing unit, and calling, by using the hardware resource object, the hardware resource of the graphics processing unit to execute the rendering instruction.

### BRIEF DESCRIPTION OF DRAWINGS

In order to more clearly illustrate the technical solutions of the embodiments of the present invention, the drawings which need to be used in the embodiments of the present invention will be briefly introduced below. It should be understood that the following drawings only show some embodiments of the present invention, and thus should not be considered as limitation to the scope. Those ordinary skilled in the art still could obtain other relevant drawings according to these drawings without using inventive efforts.
FIG. 1 is a schematic diagram of a management apparatus for graphics rendering resources provided in an embodiment of the present invention;
FIG. 2 is an expanded schematic diagram of a management apparatus for graphics rendering resources provided in an embodiment of the present invention;
FIG. 3 is a flowchart of a management method for graphics rendering resources provided in an embodiment of the present invention;
FIG. 4 is a schematic diagram of rendering programs calling a GPU in the prior art;
FIG. 5 is a schematic diagram of rendering programs calling a GPU in an embodiment of the present invention;
FIG. 6 is a structural schematic diagram of an electronic device provided in an embodiment of the present invention; and
FIG. 7 is a flowchart of a rendering method provided in an embodiment of the present invention.

Reference signs: management apparatus 100 for graphics rendering resources; first rendering program module 110; second rendering program module 120; driving layer 130; electronic device 600; central processing unit 610; memory 620; graphics processing unit 630.

### DETAILED DESCRIPTION OF EMBODIMENTS

In order to make the objectives, technical solutions and advantages of the embodiments of the present invention clearer and more understandable, the present invention is further described in detail hereinafter in conjunction with the drawings and embodiments. It should be understood that the specific embodiments described herein are merely used for illustration.

Embodiments of the present invention provide a management apparatus 100 for graphics rendering resources, wherein the management apparatus 100 for graphics rendering resources is applicable to a central processing unit, which may be a CPU. In the above, the central processing unit can be configured with a rendering program, and the central processing unit is connected to a graphics processing unit, wherein the graphics processing unit may be a GPU, an NPU, etc., and thus the central processing unit can call the graphics processing unit to perform rendering when the rendering program is executed. The embodiments of the present invention will be described subsequently with the graphics processing unit being GPU and the central processing unit being CPU.

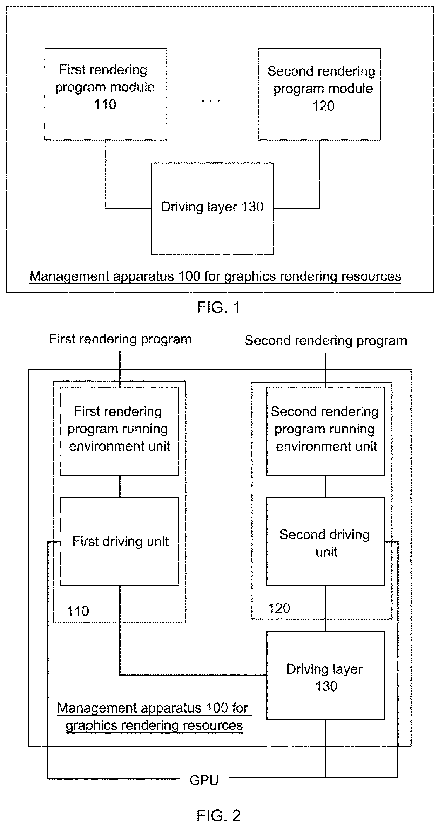

Referring to FIG. 1, FIG. 1 is a schematic diagram of a management apparatus 100 for graphics rendering resources provided in an embodiment of the present invention. The management apparatus 100 for graphics rendering resources includes a plurality of rendering program modules and a driving layer. The following description is made by taking two rendering program modules as an example, but in fact, a central processing unit may also be provided with more rendering program modules, which will not be further expanded herein. In the above, for ease of distinction, the two rendering program modules are a first rendering program module and a second rendering program module respectively, and the first rendering program module and the second rendering program module are any two different rendering program modules in the central processing unit. That is, in the embodiments of the present invention, the management apparatus for graphics rendering resources includes a first rendering program module 110, a second rendering program module 120 and a driving layer 130.

A rendering program run by the first rendering program module 110 may be called as a first rendering program, a rendering program run by the second rendering program module 120 may be called as a second rendering program, and the first rendering program and the second rendering program are different rendering programs. For example, the first rendering program may be Vulkan and the second rendering program may be D3D or openGL.

In the embodiments of the present invention, each rendering program module includes a running environment unit and a driving unit corresponding to a rendering program. For example, referring to FIG. 2, FIG. 2 is an expanded structural schematic diagram of the management apparatus 100 for graphics rendering resources provided in an embodiment of the present invention. The first rendering program module 110 may include a first rendering program running environment unit and a first driving unit, wherein the first rendering program running environment unit is used to configure a Runtime (running environment) of the first rendering program, the first driving unit is configured with a driving program corresponding to the first rendering program, and the driving program is configured to enable the rendering program to call the graphics processing unit GPU. In the above, through the Runtime provided by the first rendering program running environment unit, the first rendering program can call the first driving unit, and further call the graphics processing unit GPU through the first driving unit.

Similar to the first rendering program module 110, in the present embodiment, the second rendering program module 120 may include a second rendering program running environment unit and a second driving unit, wherein the second rendering program running environment unit is used to configure Runtime of the second rendering program, the second driving unit is configured with a driving program corresponding to the first rendering program. Thus, through the Runtime provided by the second rendering program running environment unit, the second rendering program can call the second driving unit, and further call the graphics processing unit GPU through the second driving unit.

The driving layer 130 is used to configure rendering resource objects respectively corresponding to different rendering programs, for example, to configure rendering resource objects of the first rendering program and the second rendering program respectively.

Next, a management method for graphics rendering resources of the present invention will be described in conjunction with the above management apparatus for graphics rendering resources.

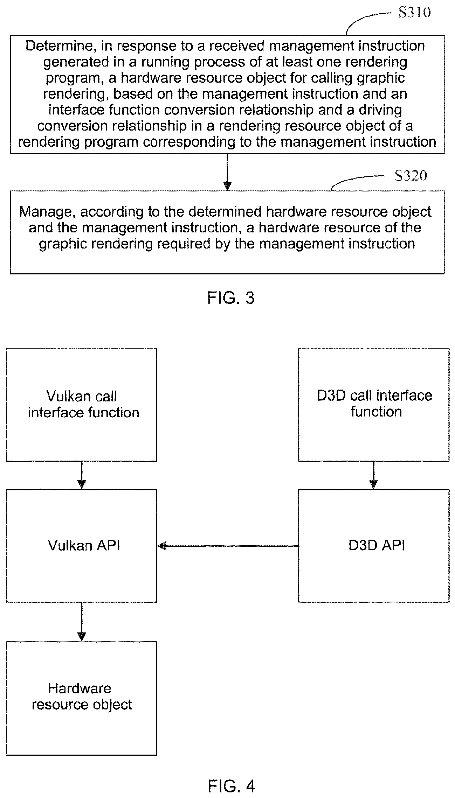

Referring to FIG. 3, FIG. 3 is a flowchart of a management method for graphics rendering resources provided in an embodiment of the present invention. The management method for graphics rendering resources is also applicable to the central processing unit; the central processing unit is connected to the graphics processing unit; the central processing unit is configured with at least two different rendering programs; and the graphics processing unit is configured to provide hardware resources of graphics rendering for the rendering programs. The management method for graphics rendering resources includes:
S310, determining, in response to a received management instruction generated in a running process of at least one rendering program, a hardware resource object for calling graphic rendering, based on the management instruction and an interface function conversion relationship and a driving conversion relationship in a rendering resource object of a rendering program corresponding to the management instruction; and
S320, managing, according to the determined hardware resource object and the management instruction, a hardware resource of the graphic rendering required by the management instruction.

For the above S310, in the embodiments of the present invention, the driving layer configures the rendering resource objects corresponding to different rendering programs respectively, wherein each rendering resource object includes the interface function conversion relationship between a pre-set hardware resource interface function and a target interface function, pre-set hardware resource interface functions in interface function conversion relationships of the rendering resource objects corresponding to different rendering programs are the same, and target interface functions in the rendering resource objects corresponding to different rendering programs are different. The target interface functions are call interface functions of the rendering programs corresponding to the rendering resource objects to the graphics processing unit GPU, the pre-set hardware resource interface functions may be a set of call interface functions separately defined, for calling the hardware resource objects. That is, the call interface functions corresponding to different rendering programs to the graphics processing unit GPU are converted into the same pre-set hardware resource interface function.

Taking that the first rendering program is Vulkan and the second rendering program is D3D as an example, a rendering resource object corresponding to the first rendering program includes a conversion relationship between the pre-set hardware resource interface function and a call interface function of Vulkan, and the rendering resource object corresponding to the second rendering program includes a conversion relationship between the pre-set hardware resource interface function and a call interface function of D3D.

Referring to FIG. 4, FIG. 4 is a schematic diagram of rendering programs calling a GPU in the prior art. A call function of each rendering program is first converted into an application programming interface API, so as to call a GPU HW Resource object (a hardware resource object of the graphics processing unit GPU) through the application programming interface API. When a first rendering program Vulkan is driven as a bottom layer, after a call interface function of a second rendering program D3D is converted into the application programming interface API, the application programming interface of the second rendering program, D3D API, will be converted into the application programming interface of the first rendering program, Vulkan API, so as to call the hardware resource object.

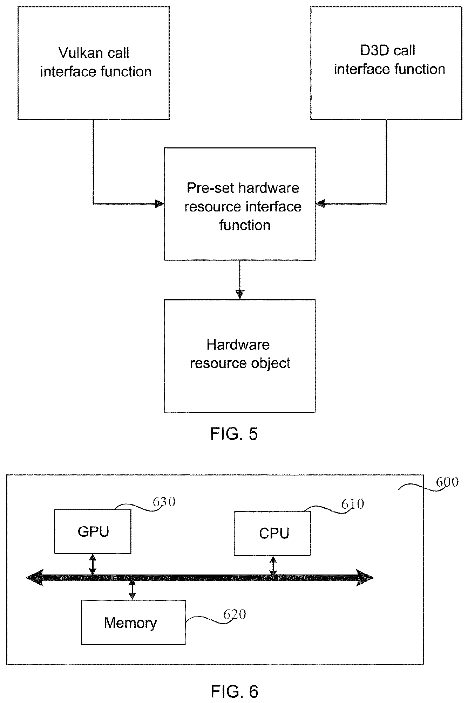

As shown in FIG. 5, FIG. 5 is a schematic diagram of rendering programs calling a GPU in embodiments of the present invention. In the embodiments of the present invention, for different rendering programs, respective call interface functions are all converted into a unified pre-set hardware resource interface function, thus, each rendering program can reduce a process of converting the call interface function into respective corresponding API, and no conversion in API level is needed, so that neither API codes corresponding to various rendering programs nor conversion logics of APIs between different rendering programs need to be designed, thus effectively reducing complexity and difficulty in designing. In addition, when the codes need to be maintained and tested, no maintenance and testing is needed for conversion in API level, thus reducing management difficulty.

In an embodiment of the present invention, the pre-set hardware resource interface function is different from the target interface functions of all the rendering programs configured in the central processing unit.

For example, if the central processing unit is provided therein with two rendering programs, D3D and Vulkan respectively, then the pre-set hardware resource interface function may be a call interface function of the rendering program OpenGL to the graphics rendering resource, and alternatively, the pre-set hardware resource interface function may also be a set of call interface functions separately configured to the graphics rendering resources. The call interface functions separately configured may not be the call interface function of any existing rendering program. By this method, the management method for graphics rendering resources can be more universal, and can be suitable for more rendering programs, rather than being limited to the call interface function conversion between two of the rendering programs.

In some other embodiments, the pre-set hardware resource interface function is the same as a target interface function of a pre-set rendering program, wherein the pre-set rendering program is any rendering program in the central processing unit. For example, if the first rendering program is the pre-set rendering program, then the first rendering program module is the pre-set rendering program module, the target interface function of the first rendering program is the pre-set hardware resource interface function; and if the first rendering program is Vulkan, then the pre-set hardware resource interface function is a call interface function of Vulkan.

Thus, during development, for the pre-set rendering program, it is unnecessary to construct the conversion relationship between the pre-set rendering program and the pre-set hardware resource interface function, and the call interface function of the pre-set rendering program is directly used and converted into a call interface to the hardware resource object. Thus, the process only needs to design a conversion of corresponding call interface function of other rendering programs to the pre-set rendering program, thereby reducing code overhead and reducing design difficulty. In the above, the call interface function is not the API of respective rendering program, that is, in the embodiments of the present invention, the call interface function is not converted into the API, and mutual conversion between the APIs of different rendering programs is not involved.

In the present embodiment, the first rendering program may be Vulkan. The rendering program Vulkan allows binding the call interface function with any hardware resource object. On this basis, if the call interface function of Vulkan is taken as the pre-set hardware resource interface function, abnormalities that may be generated when establishing and releasing a relationship between the hardware resource object and the pre-set hardware resource interface function in processes of creating and destroying the rendering resource object can be effectively reduced, and thus accuracy of hardware resource management of the graphics processing unit GPU is improved.

The driving layer 130 further includes a driving conversion relationship between the pre-set hardware resource interface function and the hardware resource object of the graphics processing unit GPU, wherein the hardware resource object is configured to call the hardware resource of the graphics processing unit GPU. For the hardware resource object, reference can be specifically made to the prior art, and it will not be expanded herein.

In the present embodiment, each rendering resource object further includes call information on the hardware resource of the GPU required by the rendering program corresponding to this rendering resource object. The required hardware resource of the GPU includes, but is not limited to, GPU video memory, dedicated acceleration data structure of GPU hardware, and the like. For example, the call information may include a handle (identification information), and an access address of the hardware resources of the GPU, etc.

Through the rendering resource objects configured above, the driving layer 130 may execute, in a situation of receiving the management instruction generated by any rendering program in the running process, a process of S310 in the above, that is, the process may determine the hardware resource object corresponding to this management instruction based on the management instruction and the interface function conversion relationship and the driving conversion relationship in the rendering resource object of the rendering program corresponding to this management instruction, and the driving layer 130 may also execute S320, and manage the hardware resource of the graphic rendering required by this management instruction according to the determined hardware resource object and the management instruction.

In some embodiments, before the management instruction is received, the rendering resource objects also need to be configured, and a configuration process may include: calling, in response to running of another rendering program other than the pre-set rendering program, a pre-set driving unit to create an initial rendering resource object of this rendering program, based on a driving unit of this rendering program, the initial rendering resource object including a pre-set hardware resource interface function; and controlling, based on the driving unit of this rendering program, the pre-set driving unit to create an interface function conversion relationship between the pre-set hardware resource interface function and a target interface function of this rendering program in the initial rendering resource object, to obtain a rendering resource object corresponding to this rendering program.

As described above, each rendering program module includes a driving unit of a corresponding rendering program. In the present embodiment, the pre-set driving unit is a driving unit of the pre-set rendering program. For example, if the first rendering program is the pre-set rendering program, then the driving unit of the first rendering program is the pre-set driving unit; and if the pre-set rendering program is Vulkan, then the pre-set driving unit is a driving unit of Vulkan.

Similarly, for the management apparatus for graphics rendering resources, the rendering resource objects are created by various rendering program modules driving the driving layer 130. In a situation that the pre-set hardware resource interface function is the target interface function of the pre-set rendering program, the pre-set rendering program module does not need to configure the relationship between the pre-set hardware interface function and the target interface function, but may directly construct the driving conversion relationship between the target interface function and the hardware resource object. Another rendering program module other than the pre-set rendering program module is configured to: call, in response to running of this rendering program, a pre-set driving unit based on the driving unit of this rendering program, to make the pre-set driving unit create an initial rendering resource object of this rendering program, the initial rendering resource object including the pre-set hardware resource interface function; and control a pre-set driving layer to create an interface function conversion relationship between the pre-set hardware resource interface function and a target interface function of this rendering program in the initial rendering resource object, to obtain a rendering resource object corresponding to this rendering program.

In the above, each target interface function includes a plurality of call interface functions of the rendering program to the GPU, that is, each target interface function is a set including a plurality of call interface functions.

Taking that the second rendering program is D3D, the first rendering program is Vulkan, and the first rendering program is the pre-set rendering program as an example, a second driving unit of the second rendering program D3D is UMD (User Mode Driver, a driving mode of D3D) driver. Specifically, a process may include: firstly, the second driving unit UMD driver of the second rendering program module 120 calls the first rendering program Vulkan to drive and create an initial rendering resource object, wherein information in the initial rendering resource object is null, and driving of the first rendering program Vulkan calls a first target interface function of the first rendering program and configures the same into the initial rendering resource object. Then, the second driving unit UMD driver drives the driving layer 130 to create a second target interface function corresponding to the second rendering program, and establishes, according to functions between the call interface functions, a correspondence relationship between call interface functions having the same function, to obtain an interface function conversion relationship including a plurality of correspondence relationships between the call interface functions, and further obtain a rendering resource object corresponding to the second rendering program.

In the embodiments of the present invention, the rendering resource object further includes call information on the hardware resource for the rendering program corresponding to this rendering resource object to perform the graphics rendering, wherein the call information on the hardware resource includes at least one of identification information on the hardware resource and an access address of the hardware resource in the GPU. In the above, after the rendering resource object is created, a corresponding hardware resource object can be allocated to the rendering resource object, that is, the driving conversion relationship is established. Each hardware resource object has corresponding identification information and access address in the GPU. After all the rendering programs are allocated with the hardware resource objects, the identification information and the access address in each hardware resource object may be fed back to the rendering program module or rendering resource object corresponding to each hardware resource object, to generate the call information on the hardware resource of the GPU required by the second rendering program.

The hardware resources of the GPU required by each rendering program are diverse, such as video memory resource and dedicated acceleration structure, and further, for the video memory, different resources in the rendering may need to be stored using different display memories. For example, in rendering, texture resources, color buffer and depth buffer need to be stored in a Vulkan Image, while vertex buffer and index buffer need to be stored in another Vulkan Buffer; therefore, for different hardware resources, corresponding initial rendering resource objects need to be created respectively, and their relationships with different hardware resource objects need to be established respectively.

Therefore, calling, based on a driving unit of this rendering program, a pre-set driving unit to create the initial rendering resource object of this rendering program may include: acquiring, in response to running of another rendering program other than the pre-set rendering program, various kinds of hardware resources required by this rendering program; calling the pre-set driving unit based on a driving unit of this rendering program, so as to make the pre-set driving unit create initial rendering resource objects corresponding to various kinds of hardware resources required by this rendering program, respectively, wherein the initial rendering resource objects corresponding to various kinds of hardware resources include pre-set hardware resource interface sub-functions corresponding to various kinds of hardware resources.

In addition, obtaining the rendering resource object based on the initial rendering resource object may include: for each initial rendering resource object, controlling, based on the driving unit of this rendering program, the pre-set driving unit to create an interface function conversion relationship between the pre-set hardware resource interface sub-function and a target interface function of this rendering program in the initial rendering resource object, to obtain a rendering resource object corresponding to this rendering program.

Correspondingly in the management apparatus for graphics rendering resources, the above method may be executed by the driving layer, that is, the driving layer 130 may be specifically configured to: determine, in response to running of the rendering program in any rendering program module, various kinds of hardware resources required by the rendering program corresponding to this rendering program module; calling the pre-set driving unit based on the driving unit of this rendering program, so as to make the pre-set driving unit create initial rendering resource objects corresponding to various kinds of hardware resources required by this rendering program, respectively, wherein the initial rendering resource objects corresponding to various kinds of hardware resources include the pre-set hardware resource interface sub-function corresponding to this kind of hardware resources; and for each initial rendering resource object, controlling, based on the driving unit of this rendering program module, the pre-set driving layer to create the interface function conversion relationship between the pre-set hardware resource interface sub-function and the target interface function of this rendering program in this initial rendering resource object, to obtain a rendering resource object corresponding to this rendering program.

Exemplarily, taking that the second rendering program is D3D, the first rendering program is Vulkan, and the first rendering program is the pre-set rendering program as an example, in this example, the UMD driver can call the first rendering program Vulkan to drive and create a plurality of initial rendering resource objects, for example, initial rendering resource objects corresponding to an image of the first rendering program, Vulkan Image, and a buffer of the first rendering program, Vulkan Buffer, wherein the initial rendering resource objects of the Vulkan Image include first target interface functions of texture resources, color buffer, depth buffer and so on, the initial rendering resource objects corresponding to the Vulkan Buffer include first target interface functions of vertex buffer, index buffer and so on; and a corresponding relationship between a first interface function and a second target interface function respectively in the Vulkan Image and the Vulkan Buffer is established, to obtain the rendering resource object. Finally, the initial rendering resource objects corresponding to the Vulkan Image and the Vulkan Buffer are respectively allocated with a corresponding hardware resource object, such as corresponding video memory, and corresponding identification information and access addresses are returned to the rendering resource objects.

Since the rendering resource object corresponding to the rendering program is configured with the access address of and identification information on the hardware resource of the GPU, during the rendering, corresponding call information can be directly acquired from the rendering resource object, and the required hardware resource is acquired by accessing the GPU through the call information. Therefore, in the embodiments of the present invention, a process of determining the hardware resource object may include: acquiring, in response to the received management instruction, at least one of the access address of and the identification information on the hardware resource required by this rendering program from the rendering resource object corresponding to this rendering program; and determining the hardware resource object based on at least one of the access address of and the identification information on the hardware resource.

As described above, the hardware resource object may include the call information on the hardware resource, such as the identification information or the access address, and after the hardware resource object has been constructed, the call information is returned to the corresponding rendering resource object. Therefore, in the embodiments of the present invention, the call information can be acquired from the rendering resource object, and the corresponding hardware resource object and required hardware resource can be determined according to the call information.

Specifically, correspondingly in the management apparatus for graphics rendering resources, a process of determining the hardware resource object can be executed by various rendering program modules, that is, each rendering program module is configured to: acquire, in response to a management instruction of a rendering program run in this rendering program module, at least one of an access address of and identification information on the hardware resource required by this rendering program from the rendering resource object corresponding to the rendering program run in this rendering program module, and determine the hardware resource object based on at least one of the access address of and the identification information on the hardware resource.

In the above manner, after the management instruction that the rendering program needs the rendering resource, at least one of corresponding access address or identification information can be directly acquired through the rendering resource object, and then the GPU is accessed according to at least one of the access address or identification information, to execute corresponding management instruction.

In an embodiment of the present invention, after the rendering resource object corresponding to the rendering program is obtained, in response to stop of running of any other rendering program other than the pre-set rendering program, the rendering resource object corresponding to this rendering program may also be destroyed.

Destruction may be implemented by a destruction unit, that is, the another rendering program module other than the pre-set rendering program module further includes the destruction unit; the driving unit of the another rendering program module is further configured to drive, in response to stop of running of a rendering program corresponding to this rendering program module, the destruction unit to destroy a rendering resource object corresponding to this rendering program in the driving layer 130.

In the present embodiment, providing the destruction unit can facilitate managing a life cycle of the rendering resource object, so that when adjustment, maintenance, and testing are needed, the rendering resource object can be quickly destroyed by the destruction unit, so as to facilitate modifying codes, troubleshooting problems, and so on.

In the above, for different types of hardware resources of the GPU, the destruction unit may be configured with a plurality of destruction interfaces. For example, the destruction unit may include destruction interfaces corresponding to the Vulkan Image and the Vulkan Buffer, so as to destroy corresponding rendering resource objects through different destruction interfaces.

The rendering involves data interaction between the GPU and CPU. In order to perform the rendering accurately, during the rendering, data reading and writing in the central processing unit and the graphics processing unit should be synchronized.

In rendering programs, a relevant module for resource synchronization is usually provided. In the embodiments of the present invention, a resource synchronization unit can be configured only in the pre-set rendering program module, and accordingly, in response to call of any rendering program to the hardware resource of the graphics rendering, data reading and writing in the central processing unit and the graphics processing unit are synchronized based on the resource synchronization unit of the pre-set rendering program.

As the call interface functions of other rendering programs are converted into the call interface function of the pre-set rendering program, in the present embodiment, the resource synchronization unit can be multiplexed, that is, the another rendering program module is further configured to call, based on a driving unit of the rendering program, the resource synchronization unit in the pre-set rendering program module, so that in a situation that a rendering program corresponding to the rendering program module calls the hardware resource of the GPU, data reading and writing in the CPU and the GPU are synchronized.

By multiplexing the resource synchronization unit, the data reading and writing in the GPU and the CPU can also be synchronized when another rendering program executes the rendering. Moreover, as there is no need to separately provide a resource synchronization unit in another rendering program module, the code overhead and design difficulty can be reduced, and the difficulty and costs of testing, maintenance and other management operations can be reduced.

It can be understood that contents implemented by the management method for graphics rendering resources are similar to functions of the management apparatus 100 for graphics rendering resources, and are not further expanded herein.

Referring to FIG. 6, based on the same inventive concept, embodiments of the present invention further provide an electronic device 600, including: a central processing unit 610, a memory 620 in communication connection with the central processing unit 610, and a graphics processing unit 630 in communication connection with the central processing unit 610. In the above, the central processing unit may be a CPU, and the graphics processing unit may be a GPU.

In the embodiments of the present invention, the memory stores a program; the central processing unit is configured to run the program so as to implement the management method for graphics rendering resources provided in the preceding embodiments. Alternatively, in the embodiments of the present invention, the memory stores a program of the management apparatus 100 for graphics rendering resources provided by any of the preceding embodiments; and the central processing unit is configured to run the program so as to implement the functions of the management apparatus 100 for graphics rendering resources.

The graphics processing unit, connected to the central processing unit, is configured to provide hardware resources of the graphics processing unit for execution of a rendering program in the central processing unit.

The memory 620 may include, but is not limited to, RAM (Random Access Memory), ROM (Read Only Memory), PROM (Programmable Read-Only Memory), EPROM (Erasable Programmable Read-Only Memory), and EEPROM (Electric Erasable Programmable Read-Only Memory), etc.

It can be understood that the electronic device 600 may further include more general modules required by itself, which will not be introduced one by one in the embodiments of the present invention.

Based on the same inventive concept, embodiments of the present invention further provide a computer-readable storage medium, storing a computer program thereon, wherein when the computer program runs on a computer, the computer is made to implement the management method for graphics rendering resources provided in any one of the above embodiments, or the computer is configured as the management apparatus 100 for graphics rendering resources provided in any of the preceding embodiments.

The storage medium may be any available medium which can be accessed by a computer or a data storage device including one or more integrated available media, such as a server and a data center. The available medium may be a magnetic medium (e.g., a floppy disk, a hard disk, magnetic tape), an optical medium (e.g., DVD), or a semiconductor medium (e.g., SSD (solid state disk)), or the like.

In the embodiments provided by the present invention, it should be understood that the method and apparatus disclosed may also be implemented in other manners. The apparatus embodiments described above are merely exemplary. Various functional modules in various embodiments of the present invention can be integrated together to form one independent part, and it is also feasible that various modules exist independently, or that two or more modules are integrated to form one independent part.

If the function is realized in a form of functional software module and is sold or used as an individual product, it may be stored in one computer-readable storage medium. Based on such understanding, the technical solutions in essence or parts making contribution to the prior art or parts of the technical solutions of the present invention can be embodied in a form of software product, and this computer software product is stored in a storage medium, including several instructions for making one computer device (which can be a personal computer, a server or a network device etc.) execute all or part of the steps of the methods of various embodiments of the present invention. The aforementioned storage medium includes various media on which program codes can be stored, such as USB flash disk, mobile hard disk, ROM, RAM, diskette or compact disk.

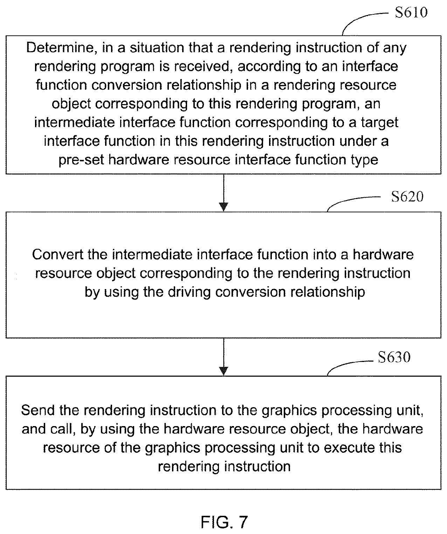

Based on the same inventive concept, the embodiments of the present invention further provide a rendering method. This rendering method is applicable to a central processing unit that can implement the above management method for graphics rendering resources, or a central processing unit configured with the management apparatus for graphics rendering resources provided by any of the preceding embodiments. Referring to FIG. 7, FIG. 7 is a flowchart of the rendering method provided in an embodiment of the present invention. The rendering method includes:
S610, determining, in a situation that a rendering instruction of any rendering program is received, according to an interface function conversion relationship in a rendering resource object corresponding to this rendering program, an intermediate interface function corresponding to a target interface function in this rendering instruction under a pre-set hardware resource interface function type.

In the above, the rendering resource object includes the interface function conversion relationship and the driving conversion relationship; and the interface function conversion relationship includes a conversion relationship between a pre-set hardware resource interface function and a target interface function of a hardware resource for calling graphic rendering; the pre-set hardware resource interface functions in rendering resource objects corresponding to different rendering programs are the same; the target interface functions in the rendering resource objects corresponding to different rendering programs are different, and the target interface functions in various rendering resource objects are call interface functions of rendering programs corresponding to the rendering resource objects to the graphic rendering resources.

S620, converting the intermediate interface function into a hardware resource object corresponding to the rendering instruction by using the driving conversion relationship.

In the above, the driving conversion relationship includes a conversion relationship between the pre-set hardware resource interface function and the hardware resource object, and the hardware resource object is configured to call the hardware resource of the graphics rendering.

S630, sending the rendering instruction to the graphics processing unit, and calling, by using the hardware resource object, the hardware resource of the graphics processing unit to execute this rendering instruction.

In this rendering method, according to the rendering resource object corresponding to the rendering program that sends the rendering instruction and a second conversion relationship, it is unnecessary to convert the rendering instruction in API level, the hardware resource object corresponding to the instruction can be quickly rendered and the hardware resource can be called, further reducing power consumption of the central processing unit caused by executing API, and improving performances of the central processing unit when performing rendering.

The technical features of various embodiments in the above can be freely combined without conflict, and embodiments obtained through combination are covered within the scope of protection of the present invention.

The above-mentioned are merely for specific embodiments of the present invention, but the scope of protection of the present invention is not limited thereto, and any changes or substitutions that could be easily conceived by a skilled person familiar with the art within the technical scope disclosed in the present invention should be covered within the scope of protection of the present invention. Therefore, the scope of protection of the present invention should be determined by the scope of protection of the claims.

It should be noted that in this document, the terms "comprise", "include" or any other variants thereof are intended to encompass non-exclusive inclusion, so that a process, a method, an article or a device that includes a series of elements not only includes those elements, but also includes other elements that are not explicitly listed, or also includes elements inherent to such process, method, article or device. In the absence of more limitations, an element defined by the phrase "including a..." does not exclude the presence of additional identical elements in the process, method, article or device that includes the specified element.

## Claims

1. A management method for graphics rendering resources, **characterized by** applied to a central processing unit, wherein the central processing unit is connected to a graphics processing unit, the central processing unit is configured with at least two different rendering programs, and the graphics processing unit is configured to provide hardware resources of graphics rendering for the rendering programs, wherein the management method for graphics rendering resources comprises steps of:
determining, in response to a received management instruction generated in a running process of at least one rendering program, a hardware resource object for calling graphic rendering, based on the management instruction and an interface function conversion relationship and a driving conversion relationship in a rendering resource object of a rendering program corresponding to the management instruction; and
managing, according to the determined hardware resource object and the management instruction, a hardware resource of the graphic rendering required by the management instruction,
wherein each of the rendering programs is separately configured with a corresponding rendering resource object, and each of the rendering resource objects comprises the interface function conversion relationship and the driving conversion relationship;
the interface function conversion relationship comprises a conversion relationship between a pre-set hardware resource interface function and a target interface function of a hardware resource required for calling the graphic rendering; the pre-set hardware resource interface functions in rendering resource objects corresponding to different rendering programs are the same; the target interface functions in the rendering resource objects corresponding to different rendering programs are different, and the target interface function in each of the rendering resource objects is a call interface function of the rendering program corresponding to the rendering resource object to the graphic rendering resource; and
the driving conversion relationship comprises a conversion relationship between the pre-set hardware resource interface function and the hardware resource object, and the hardware resource object is configured to call the hardware resource of the graphics rendering.

2. The management method for graphics rendering resources according to claim 1, wherein the pre-set hardware resource interface function is different from the target interface functions of all the rendering programs configured in the central processing unit.

3. The management method for graphics rendering resources according to claim 1, wherein the central processing unit further comprises a driving layer and driving units respectively corresponding to the different rendering programs;
the pre-set hardware resource interface function is the same as a target interface function of a pre-set rendering program; the pre-set rendering program is any rendering program in the central processing unit; and the pre-set rendering program corresponds to a pre-set driving unit;
prior to determining a hardware resource object for calling graphic rendering, based on the management instruction and an interface function conversion relationship and a driving conversion relationship in a rendering resource object of a rendering program corresponding to the management instruction, the method further comprises steps of:
calling, in response to running of another rendering program other than the pre-set rendering program, the pre-set driving unit to create an initial rendering resource object of the rendering program, based on a driving unit of the rendering program, wherein the initial rendering resource object comprises the pre-set hardware resource interface function; and
controlling, based on the driving unit of the rendering program, the pre-set driving unit to create an interface function conversion relationship between the pre-set hardware resource interface function and a target interface function of the rendering program in the initial rendering resource object, to obtain the rendering resource object corresponding to the rendering program.

4. The management method for graphics rendering resources according to claim 3, wherein the rendering resource object further comprises call information on the hardware resource for the rendering program corresponding to the rendering resource object to perform the graphics rendering, wherein the call information comprises at least one of identification information on the hardware resource object and an access address of a hardware resource corresponding to the hardware resource object in the graphics processing unit.

5. The management method for graphics rendering resources according to claim 4, wherein the step of determining a hardware resource object for calling graphic rendering, based on the management instruction and an interface function conversion relationship and a driving conversion relationship in a rendering resource object of a rendering program corresponding to the management instruction, comprises:
acquiring, in response to the received management instruction, at least one of the access address of and the identification information on the hardware resource required by the rendering program, from the rendering resource object corresponding to the rendering program; and
determining the hardware resource object based on at least one of the access address of and the identification information on the hardware resource.

6. The management method for graphics rendering resources according to claim 3, wherein hardware resources of graphics rendering required by each rendering program are diverse; and the pre-set hardware resource interface function comprises pre-set hardware resource interface sub-functions corresponding to various kinds of hardware resources respectively;
the step of calling the pre-set driving unit to create an initial rendering resource object of the rendering program, based on a driving unit of the rendering program, comprises:
acquiring, in response to running of another rendering program other than the pre-set rendering program, various kinds of hardware resources required by the rendering program; and calling the pre-set driving unit based on a driving unit of the rendering program, so as to make the pre-set driving unit create initial rendering resource objects corresponding to various kinds of hardware resources required by the rendering program, respectively, wherein the initial rendering resource objects corresponding to various kinds of hardware resources comprise pre-set hardware resource interface sub-functions corresponding to various kinds of hardware resources;
the step of controlling, based on the driving unit of the rendering program, the pre-set driving unit to create an interface function conversion relationship between the pre-set hardware resource interface function and a target interface function of the rendering program in the initial rendering resource object, to obtain the rendering resource object corresponding to the rendering program, comprises:
controlling, for each of the initial rendering resource objects, based on the driving unit of the rendering program, the pre-set driving unit to create an interface function conversion relationship between the pre-set hardware resource interface sub-function and the target interface function of the rendering program, in the initial rendering resource object, to obtain the rendering resource object corresponding to the rendering program.

7. The management method for graphics rendering resources according to claim 3, wherein after obtaining the rendering resource object corresponding to the rendering program, the method further comprises a step of:
destroying, in response to a stop in running of any other rendering program other than the pre-set rendering program, the rendering resource object corresponding to the stopped rendering program.

8. The management method for graphics rendering resources according to claim 3, wherein after the step of determining a hardware resource object for calling graphic rendering, based on the management instruction and an interface function conversion relationship and a driving conversion relationship in a rendering resource object of a rendering program corresponding to the management instruction, the method further comprises a step of:
synchronizing, in response to a call of any rendering program to the hardware resource of the graphics rendering, data reading and writing in the central processing unit and the graphics processing unit based on a resource synchronization unit of the pre-set rendering program.

9. A management apparatus for graphics rendering resources, **characterized by** applied to a central processing unit, wherein the central processing unit is connected to a graphics processing unit, the central processing unit is configured with at least two different rendering programs, and the graphics processing unit is configured to provide hardware resources of graphics rendering for the rendering programs, wherein the management apparatus for graphics rendering resources comprises:
at least two rendering program modules, wherein the rendering program modules which are different run different rendering programs respectively; and
a driving layer, configured to determine, in response to a received management instruction generated in a running process of at least one rendering program, a hardware resource object for calling graphic rendering, based on the management instruction and an interface function conversion relationship and a driving conversion relationship in a rendering resource object of a rendering program corresponding to the management instruction, wherein
the driving layer is further configured to manage, according to the determined hardware resource object and the management instruction, a hardware resource of graphic rendering required by the management instruction,
wherein the driving layer is separately configured, each of the rendering programs is separately configured with a corresponding rendering resource object, and each of the rendering resource objects comprises the interface function conversion relationship and the driving conversion relationship;
the interface function conversion relationship comprises a conversion relationship between a pre-set hardware resource interface function and a target interface function of a hardware resource required for calling the graphic rendering; the pre-set hardware resource interface functions in rendering resource objects corresponding to different rendering programs are the same; the target interface functions in the rendering resource objects corresponding to different rendering programs are different, and the target interface function in each of the rendering resource objects is a call interface function of the rendering program corresponding to the rendering resource object to the graphic rendering resource; and
the driving conversion relationship comprises a conversion relationship between the pre-set hardware resource interface function and the hardware resource object, and the hardware resource object is configured to call the hardware resource of the graphics rendering.

10. The management apparatus for graphics rendering resources according to claim 9, wherein the pre-set hardware resource interface functions in the rendering resource objects are different from call interface functions used by the rendering programs corresponding to the rendering program modules.

11. The management apparatus for graphics rendering resources according to claim 9, wherein the different rendering program modules each comprise a driving unit corresponding to respective rendering program;
the pre-set hardware resource interface functions in the rendering resource objects are the same as the target interface function of the pre-set rendering program; the pre-set rendering program is a rendering program corresponding to any one of the rendering program modules; and the pre-set rendering program module of the pre-set rendering program comprises a pre-set driving unit;
another rendering program module other than the pre-set rendering program module is configured to: call, in response to running of the rendering program, the pre-set driving unit to create an initial rendering resource object of the rendering program, based on a driving unit of the rendering program, wherein the initial rendering resource object comprises the pre-set hardware resource interface function; and
the driving unit corresponding to the rendering program is further configured to control the pre-set driving unit to create an interface function conversion relationship between the pre-set hardware resource interface function and a target interface function of the rendering program in the initial rendering resource object, to obtain the rendering resource object corresponding to the rendering program.

12. The management apparatus for graphics rendering resources according to claim 11, wherein the rendering resource object further comprises call information on a hardware resource for the rendering program corresponding to the rendering resource object to perform the graphics rendering, wherein the call information comprises at least one of identification information on the hardware resource and an access address of the hardware resource in the graphics processing unit.

13. The management apparatus for graphics rendering resources according to claim 12, wherein each of the rendering program modules is configured to: acquire, in response to the management instruction of the rendering program running in the rendering program module, at least one of an access address of and identification information on the hardware resource required by the rendering program, from the rendering resource object corresponding to the rendering program running in the rendering program module, and determine the hardware resource object based on at least one of the access address of and the identification information on the hardware resource.

14. The management apparatus for graphics rendering resources according to claim 11, wherein
the hardware resources of the graphics processing unit GPU required by each rendering program are diverse; and the pre-set hardware resource interface function comprises pre-set hardware resource interface sub-functions corresponding to various kinds of hardware resources respectively;
the driving layer is further configured to: acquire, in response to running of the rendering program in any of the rendering program modules, various kinds of hardware resources required by the rendering program of the rendering program module; call the pre-set driving unit based on the driving unit corresponding to the rendering program module, so as to make the pre-set rendering program drive the pre-set driving layer to create initial rendering resource objects corresponding to various kinds of hardware resources required by the rendering program, respectively, wherein the initial rendering resource objects corresponding to various kinds of hardware resources comprise pre-set hardware resource interface sub-functions corresponding to various kinds of hardware resources; and
the driving layer is further configured to: control, for the initial rendering resource object corresponding to each of the rendering programs, based on the driving unit corresponding to the rendering program, the pre-set driving unit to create an interface function conversion relationship between the pre-set hardware resource interface sub-function and the target interface function of the rendering program corresponding to the rendering program module in the initial rendering resource object, to obtain the rendering resource object corresponding to the rendering program.

15. The management apparatus for graphics rendering resources according to claim 11, wherein another rendering program module other than the pre-set rendering program module further comprises a destruction unit; and the another rendering program module is further configured to drive, in response to stop of running of the rendering program of the rendering program module, the destruction unit to destroy the rendering resource object corresponding to the rendering program in the driving layer.

16. The management apparatus for graphics rendering resources according to claim 11, wherein the pre-set rendering program module further comprises a resource synchronization unit, wherein the resource synchronization unit is configured to synchronize, in a situation that the rendering program in any of the rendering program modules calls the hardware resource of the graphics processing unit, data reading and writing in the central processing unit and the graphics processing unit.

17. An electronic device, comprising: a processing unit; a memory, wherein the memory stores a program; the processing unit is configured to run the program to implement the management method for graphics rendering resources according to any one of claims 1-8; and
a graphics processing unit, connected to the processor unit, and configured to provide the hardware resources of the graphics rendering for execution of the rendering program in the central processing unit.

18. A computer-readable storage medium, **characterized in that** the readable storage medium stores a computer program, and when the computer program runs on a computer, the computer is made to implement the management method for graphics rendering resources according to any one of claims 1-8.

19. A rendering method, comprising:
determining, in a situation that a rendering instruction of any rendering program is received, according to an interface function conversion relationship in a rendering resource object corresponding to the rendering program, an intermediate interface function corresponding to a target interface function in the rendering instruction under a pre-set hardware resource interface function type, wherein
the rendering resource object comprises the interface function conversion relationship and a driving conversion relationship; and the interface function conversion relationship comprises a conversion relationship between a pre-set hardware resource interface function and a target interface function of a hardware resource for calling graphic rendering; the pre-set hardware resource interface functions in rendering resource objects corresponding to different rendering programs are the same; target interface functions in the rendering resource objects corresponding to different rendering programs are different, and the target interface function in each of the rendering resource objects is a call interface function of the rendering program corresponding to the rendering resource object to the graphic rendering resource;
converting the intermediate interface function into a hardware resource object corresponding to the rendering instruction by using the driving conversion relationship, wherein the driving conversion relationship comprises a conversion relationship between the pre-set hardware resource interface function and the hardware resource object, and the hardware resource object is configured to call the hardware resource of the graphics rendering; and
sending the rendering instruction to the graphics processing unit, and calling, by using the hardware resource object, the hardware resource of the graphics processing unit to execute the rendering instruction.
